Europäisches Patentamt

European Patent Office

Office européen des brevets

(19)

(11) **EP 0 931 250 B1**

(12) **FASCICULE DE BREVET EUROPEEN**

(45) Date de publication et mention
de la délivrance du brevet:
**14.07.2004 Bulletin 2004/29**

(21) Numéro de dépôt: **97944942.8**

(22) Date de dépôt: **08.10.1997**

(51) Int Cl.⁷: **G01L 9/00**, G01L 19/06

(86) Numéro de dépôt international:
**PCT/FR1997/001794**

(87) Numéro de publication internationale:
**WO 1998/015808 (16.04.1998 Gazette 1998/15)**

(54) **CELLULE DE CONVERSION D'UNE PRESSION DIFFERENTIELLE EN SIGNAL ELECTRIQUE**

MESSZELLE ZUR UMWANDLUNG EINES DIFFERENZDRUCKS IN EIN ELEKTRISCHES SIGNAL

CELL FOR CONVERTING DIFFERENTIAL PRESSURE INTO AN ELECTRIC SIGNAL

(84) Etats contractants désignés:
**DE DK ES FR GB IT NL SE**

(30) Priorité: **09.10.1996 FR 9612474**

(43) Date de publication de la demande:
**28.07.1999 Bulletin 1999/30**

(73) Titulaire: **SCHLUMBERGER INDUSTRIES S.A.**
**92120 Montrouge (FR)**

(72) Inventeur: **ZARUDIANSKY, Alain**
**F-78140 Vélizy (FR)**

(74) Mandataire: **Feray, Valérie et al**
**Feray Lenne Conseil**
**44/52, Rue de la Justice**
**75020 Paris (FR)**

(56) Documents cités:
**DE-A- 2 718 931      DE-A- 4 315 962**

• **PATENT ABSTRACTS OF JAPAN vol. 012, no.
266 (P-735), 26 juillet 1988 & JP 63 052030 A
(YOKOGAWA ELECTRIC CORP), 5 mars 1988,**

**Description**

L'invention est relative à une cellule de conversion d'une pression différentielle en signal électrique comprenant :

- deux chambres remplies d'un fluide incompressible délimitées chacune par une membrane susceptible de se déformer sous l'action d'une pression extérieure et séparées l'une de l'autre par une paroi rigide,
- un capteur associé à la dite paroi, sensible à la différence de pression exercée de part et d'autre de la paroi, et délivrant en réponse un signal électrique.

De telles cellules sont utilisées dans bon nombre d'applications et notamment dans les débitmètres à oscillateur fluidique.

Dans ce type de débitmètre qui est symétrique par rapport à un plan longitudinal, l'écoulement de fluide est transformé en jet de fluide qui oscille dans une chambre dite d'oscillation transversalement par rapport à ce plan suivant une fréquence d'oscillation proportionnelle au débit du fluide.

Une cellule convertit en un signal électrique représentatif de la fréquence d'oscillation les variations de la pression différentielle qui apparaît entre deux positions prises alternativement par le jet de fluide symétriquement par rapport au plan longitudinal précédemment défini.

A partir de ce signal électrique une électronique associée transforme ledit signal en créneaux qui permettent de déterminer le débit de fluide dans l'oscillateur ainsi que le volume qui l'a traversé.

Il est amsi possible de créer un canal reliant les deux points correspondant respectivement aux deux positions symétriques du jet de fluide et de placer dans ce canal la cellule de conversion afin d'obtenir le signal électrique représentatif de la pression différentielle entre les deux pnses de pression correspondant aux positions symétriques extrêmes du jet de fluide.

Cette cellule de conversion comprend deux chambres remplies d'un fluide incompressible tel que de l'huile, séparées par une paroi rigide et délimitées chacune par une membrane qui est opposée à la paroi. Chacune des membranes est en contact avec le fluide du canal et est soumise directement à une pression de la part dudit fluide. Ainsi, les deux membranes sont toujours soumises à l'action de pressions différentes qui varient de manière alternative suivant l'oscillation du jet. Ces pressions sont transmises à la paroi de séparation par l'intermédiaire du fluide incompressible présent dans les chambres.

La paroi de séparation des chambres porte un capteur de pression différentielle qui communique avec chacune des chambres afin d'être exposé aux pressions régnant dans celles-ci.

Ce capteur est par exemple celui décrit dans le document CH 680 392 qui comprend un élément central fixe entre deux éléments déformables qui sont soumis chacun à la pression régnant dans la chambre qui est en vis-à-vis.

Deux cavités parallèles communicantes sont formées respectivement entre chaque élément déformable et l'élément central pour permettre le fonctionnement du capteur. Chaque couple élément central/élément déformable est muni respectivement d'électrodes disposées en regard et forme une capacité qui varie de manière différente lorsque des pressions différentes sont appliquées sur chacun des éléments déformables.

Lors du remplissage des chambres par le fluide incompressible et de leur scellement il est très probable que les opérations de remplissage et de scellement ne soient pas identiques d'une chambre à l'autre ce qui risque d'engendrer une différence de pression entre lesdites chambres.

Cette différence de pression peut être d'autant plus grande que le volume de chaque chambre n'est pas rigoureusement identique et que les membranes n'ont pas exactement la même rigidité.

En raison de cette différence de pression "parasite", le (ou les) élément(s) déformable(s) dudit capteur va(vont) subir une déformation résiduelle qui va introduire d'emblée une erreur dans les mesures ulténeures.

Ce phénomène est encore accentué lorsque la température du milieu dans lequel se trouve la cellule de conversion augmente avec une fréquence faible voire nulle (phénomène non répétitif) car, alors, le volume des chambres augmente différemment d'une chambre à l'autre ce qui provoque une déformation résiduelle plus grande du(ou des) élément(s) déformable(s) et donc introduit une erreur encore plus élevée avant toute mesure.

Pour éviter ceci. un soin tout particulier doit être apporté à la fabrication des cellules de conversion ce qui complexifie le processus de fabrication et en augmente le coût.

Il serait donc intéressant de concevoir une cellule de conversion qui soit plus simple à fabriquer que dans l'art antérieur et donc moins coûteuse et qui s'affranchisse des problèmes de dérive avec la température.

Le document DE-A-4 315 962 se rapporte à une cellule de conversion d'une pression différentielle en un signal électrique. Les passages 18, 19 dans ce document forment des conduits de remplissage pour remplir le fluide incompressible dans les deux chambres qui sont fermés après ledit remplissage.

La présente invention a ainsi pour objet une cellule de conversion d'une pression différentielle en signal électrique comprenant :

- deux chambres remplies d'un fluide incompressible délimitées chacune par une membrane susceptible de se déformer sous l'action d'une pression extérieure et séparées l'une de l'autre par une paroi rigide,

- un capteur associé à la dite paroi, sensible à la différence de pression exercée de part et d'autre de la paroi, et délivrant en réponse un signal électrique, caractérisé en ce qu'au moins un passage est pratiqué entre les deux chambres et possède des dimensions adaptées pour, d'une part, au moins atténuer une différence de pression parasite s'établissant de part et d'autre de la paroi avec une fréquence faible voire nulle et, d'autre part, laisser ledit capteur détecter la différence de pression exercée de part et d'autre de la paroi aux fréquences plus élevées.

En l'absence de l'invention, les différences de pression parasites qui s'installent de part et d'autre de la paroi de séparation des chambres avec une fréquence inférieure à celles de la gamme utile détectées par le capteur de pression différentielle agissent sur ledit capteur.

Le passage aux dimensions adaptées permet quant à lui d'atténuer, pour les fréquences faibles, et de compenser, pour les fréquences très faibles, ces différences de pression parasites par le mouvement du fluide incompressible dans ledit passage qui permet d'équilibrer de manière quasi statique la pression d'une chambre à l'autre.

Ce passage exerce une fonction de filtre fluidique vis-à-vis des fréquences des pressions différentielles parasites.

Les dimensions du passage dépendent de paramètres tels que la viscosité du fluide. la fréquence dite de coupure en dessous de laquelle les différences de pression parasites sont considérablement atténuées au droit du capteur, les dimensions et matériaux utilisés pour les membranes et sont donc à déterminer pour chaque application en fonction de la gamme de fréquences utiles et des fréquences des différences de pression parasites.

Au dessus de la fréquence basse de la gamme de fréquences utiles le passage ne doit plus filtrer les pressions différentielles entre les chambres de part et d'autre de la paroi de séparation afin de ne pas entraver le fonctionnement du capteur dans cette gamme de fréquences.

Selon un mode de réalisation de l'invention, le passage aux dimensions adaptées est pratiqué dans la paroi de séparation des chambres

Selon un autre mode de réalisation, une ouverture de dimensions élargies par rapport aux dimensions adaptées du passage, dite principale, est pratiquée dans la paroi de séparation des chambres et ledit passage est pratiqué dans une pièce qui est rapportée sur ladite paroi de séparation de manière à ce que le passage et l'ouverture communiquent entre eux.

Selon encore un autre mode de réalisation de l'invention, le passage aux dimensions adaptées est réalisé sous la forme d'un canal de communication qui contourne la paroi de séparation des chambres.

Selon une caractéristique de l'invention, la pièce rapportée est de forme sensiblement cylindrique.

D'autres caractéristiques et avantages apparaîtront au cours de la description qui va suivre, donnée uniquement à titre d'exemple, non limitatif et faite en référence aux dessins annexés, sur lesquels :

- la figure 1 est une vue en coupe schématique longitudinale montrant l'emplacement d'une cellule de conversion de pression différentielle en signal électrique selon l'invention dans un oscillateur fluidique de type connu.
- la figure 2 est une vue schématique en coupe d'une cellule de conversion selon un premier mode de réalisation de l'invention,
- la figure 3 est une vue représentant une courbe qui traduit la réponse fréquencielle du filtre fluidique constitué du passage pratiqué entre les deux chambres et des membranes,
- la figure 4 montre sur un même diagramme les évolutions d'un débit de fluide Q dans l'oscillateur fluidique de la figure 1, d'une montée en température T de l'eau dans la conduite d'amenée qui est raccordée à l'oscillateur fluidique et la réponse S de la cellule de conversion de pression différentielle représentée à la figure 2,
- la figure 5 est une vue schématique en coupe d'une cellule de conversion selon un autre mode de réalisation de la cellule représentée sur la figure 3.
- la figure 6 est une vue schématique en coupe d'une cellule de conversion selon une variante de réalisation de la cellule représentée sur la figure 2,
- la figure 7 est une vue schématique en coupe d'une cellule de conversion selon encore un autre mode de réalisation de l'invention.

La cellule de conversion de la pression différentielle en signal électrique selon l'invention trouve une application particulièrement intéressante dans les débitmètres à oscillateur fluidique.

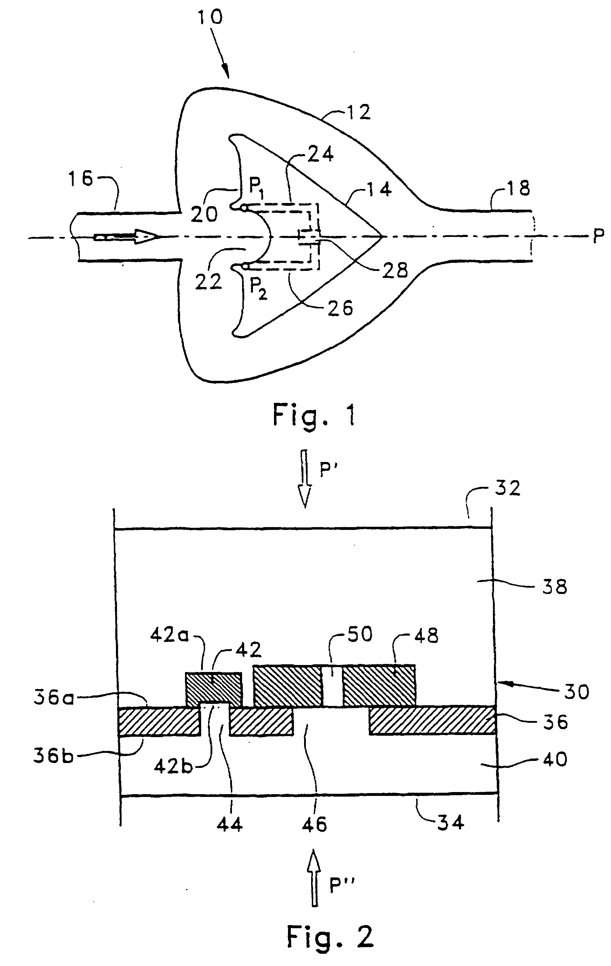

Comme représenté à la figure 1, un oscillateur fluidique référencé 10 de type connu. comprend une enceinte 12 dans laquelle est positionné un obstacle 14, et une amenée 16 ainsi qu'une évacuation 18 de l'écoulement de fluide, toutes deux alignées suivant le plan de symétrie longitudinal P de l'oscillateur fluidique.

L'amenée de fluide est réalisée sous la forme d'une fente 16 qui permet d'engendrer un jet de fluide bidimensionnel qui rencontre dans l'enceinte 12 l'obstacle 14 situé en face de ladite fente 16. Cet obstacle 14 comprend une paroi frontale 20 dans laquelle est aménagée une cavité 22 située en vis-à-vis de la fente 16 et qui reçoit l'impact du jet de fluide provenant de celle-ci.

Par suite d'instabilités naturelles, le jet de fluide issu de la fente 16 balaye les parois de la cavité 22 et occupe deux positions extrêmes symétriques situées de part et d'autre du plan de symétrie longitudinal P de l'oscillateur fluidique. Les positions extrêmes du jet de fluide sont référencées P1 et P2 et sont respectivement reliées par des canaux 24, 26, indiqués en pointillés sur la figure 1, à une cellule de conversion 28 selon l'invention.

La cellule 28 peut être montée au dessus ou en dessous de l'obstacle 14 ou bien à l'intérieur de celui-ci si ses dimensions le permettent.

Selon un mode de réalisation de l'invention représenté à la figure 2, la cellule de conversion a la forme d'un cylindre comprenant une paroi périphérique cylindrique 30 et deux membranes 32, 34 par exemple en acier opposées situées aux deux extrémités dudit cylindre et fermant celui-ci. Chacune des membranes 32. 34 est respectivement en contact, d'une part, avec le fluide situé dans le canal 24, 26 afin d'être soumise à la pression provenant du jet de fluide situé dans la posiuon P1 respectivement P2, et d'autre part, avec l'intérieur de la cellule.

Une paroi rigide 36, par exemple, réalisée dans un matériau tel que l'alumine sépare l'intérieur de la cellule en deux chambres distinctes 38 et 40. Les deux chambres 38 et 40 sont remplies d'un fluide incompressible tel que par exemple de l'huile.

Un capteur de pression différentielle 42 par exemple du type de celui décrit dans le document CH 680 392 ou dans le document FR 2 701 564 est monté sur l'une des faces 36a de la paroi de séparation 36.

L'une des faces 42a du capteur 42 est en contact avec l'huile de la chambre 38 et l'autre face opposée 42b dudit capteur est en contact avec l'huile présente dans l'autre chambre 40 par l'intermédiaire d'un orifice 44 aménagé dans la paroi de séparation 36. Ainsi, lorsque le jet de fluide balaye la cavité 22 (Fig.1) et occupe alternativement les positions P1 et P2, chacune des membranes 32, 34 reçoit respectivement et alternativement la pression P', P". La pression différentielle ente P1 et P2 est ainsi appliquée de manière alternative avec une fréquence dite d'oscillation à la cellule de conversion selon l'invention et le capteur 42 délivre un signal électrique représentatif de la fréquence d'oscillation du jet en réponse aux variations de cette pression différentielle qui lui est transmise par l'intermédiaire de l'huile présente dans les chambres 38 et 40. Les moyens électroniques nécessaires au traitement du signal délivré par le capteur afin d'obtenir un débit de fluide ne sont pas représentés sur la paroi de séparation 36.

Une ouverture 46 par exemple de forme circulaire est pratiquée dans la paroi de séparation 36.

Une pièce 48 de forme par exemple cylindrique est réalisée dans un matériau tel que du verre et est montée en regard de l'ouverture 46.

Cette pièce 48 de dimensions radiales supérieures à celles de l'ouverture 46 est montée en contact avec la paroi de séparation 36 à la périphérie de l'ouverture 46. Cette pièce rapportée 48 est par exemple montée par collage sur la paroi 36 et présente en son centre un passage 50 qui possède des dimensions réduites par rapport à celles de l'ouverture 46. Afin de simplifier la fabrication du passage 50, celui-ci est de forme cylindrique La Demanderesse s'est aperçue que pour dimensionner le passage 50, il pouvait être utile de procéder à une analogie électrique. Suivant cette analogie, la différence de pression $|P'- P"|$ exercée sur la cellule correspond à une tension électrique, le débit de fluide Q passant à travers le passage 50 correspond à un courant électrique, le volume d'huile poussé par la déflexion de chaque membrane 32, 34, par unité de pression correspond à la capacité notée C, et la résistance qu'offre le passage 50 à l'écoulement d'huile correspond à la résistance électrique notée R. Ainsi, la différence de pression notée $\Delta P$ s'exprime de la façon suivante en rotation imaginaire classique :

$$\Delta P = (R + 1 / j(C/2)\omega)\, Q$$

où w est la pulsation pour la fréquence courante $f = \omega/2\pi$.

Si l'on appelle $\Delta P_s$ la différence de pression exercée identiquement de part et d'autre du capteur 42 et du passage 50, pour dimensionner le passage 50, il convient de déterminer la fréquence pour laquelle le rapport $\Delta P_s/\Delta P$ est aussi proche que possible de la valeur 1.

En pratique. on considère que le rapport $\Delta P_s/\Delta P$ est égal à $1 - \varepsilon/2$, où $\varepsilon/2$ correspond à l'erreur acceptable (par exemple 4%) à la fréquence considérée. En résolvant cette équation qui s'écrit :

$$R / \sqrt{R^2\, 1/(C/2)^2\, \omega^2} = 1-\varepsilon/2$$

On trouve la valeur $\varepsilon$ suivante :

$$\varepsilon = 4/R^2 C^2\, \omega^2$$

La constante de temps $\tau$ du filtre est égale à RC/2 et la fréquence de coupure fc du filtre est égale à celle pour laquelle l'atténuation du signal est dans le rapport $1/\sqrt{2}$ par rapport à la valeur du signal dans la gamme de fréquences utiles, c'est-à-dire $1/\pi RC$.

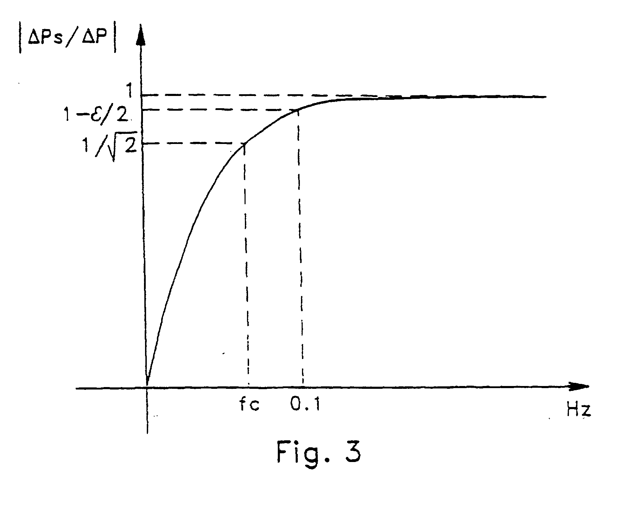

La fonction $\Delta P_s/\Delta P$ qui traduit le fonctionnement du filtre suivant la fréquence a l'allure indiquée par la courbe de la figure 3.

La fréquence pour laquelle le rapport $\Delta P_s/\Delta P$ est égal, par exemple, à 0,96(1-4%), est déterminée, lors du dimensionnement du passage 50, en tenant compte de deux paramètres : d'une part, la fréquence du signal d'oscillation liée au débit minimum du fluide à mesurer et que le capteur 42 doit pouvoir détecter sans atténuation dûe au filtre et, d'autre part, la fréquence des phénomènes lents qui font apparaître des pressions différentielles parasites de part et d'autre de la paroi 36. dans les chambres 38, 40 et qu'il est souhaitable d'atténuer au maximum.

En effet, on peut souhaiter, par exemple, détecter des fréquences d'oscillation supérieures à 0,1 Hz et éviter que des phénomènes lents dûs à l'environnement ne permettent l'installation entre les chambres 38, 40, d'une pression différentielle parasite avec une fréquence basse (f<<0,1Hz) voire nulle, ce qui créerait une déformation de l'élément sensible du capteur 42 qui entraînerait une perturbation du comptage du fluide écoulé à travers l'oscillateur fluidique. Un tel phénomène peut se produire, par exemple, lorsque le volume de chacune des chambres 38, 40 n'est pas rigoureusement identique et lorsque la cellule de mesure est soumise à une augmentation de température de 25°C par rapport à la température ambiante (20°C) pendant une période d'environ 40s (0,025 Hz).

Le passage 50 de dimensions appropriées permet de compenser la pression différentielle parasite résultant de l'augmentation de température en équilibrant les pressions dans les chambres 38 et 40 de la cellule.

Dans ce mode de fonctionnement de la cellule, le rapport $\Delta P_s/\Delta P$ sera très inférieur à 1 (partie de la courbe de la figure 3 située à gauche de la fréquence fc), le capteur ne sera pratiquement pas sollicité et la pression restera pratiquement équilibrée de part et d'autre de la paroi 36 pendant la durée du phénomène lent perturbateur.

Pour des phénomènes moins lents (périodes de l'ordre de 10 à 20 s) le rapport $\Delta P_s/\Delta P$ est davantage proche de 1 que dans le cas précédent et le capteur est donc bien plus affecté par l'apparition de cette pression différentielle parasite.

Au delà de 0,1 Hz, le capteur doit pouvoir détecter les signaux oscillatoires et donc le passage 50 ne doit plus imposer l'équilibre des pressions mais transmettre intégralement les variations de la pression différentielle.

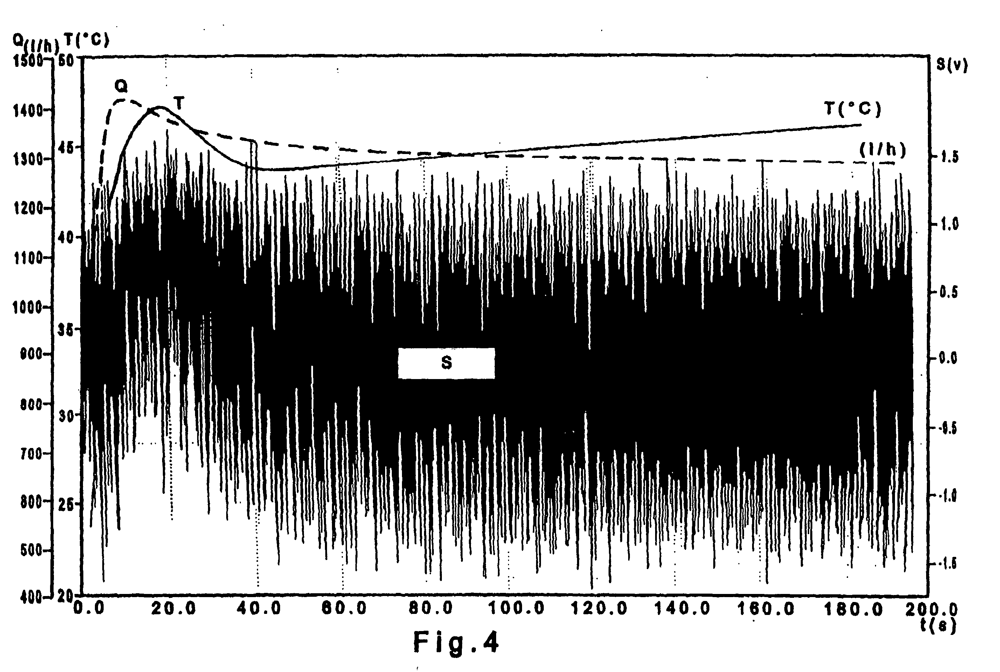

La figure 4 montre sur un même diagramme les évolutions d'un débit de fluide Q dans l'oscillateur fluidique de la figure 1, d'une montée en température T de l'eau dans la conduite d'amenée qui est raccordée à l'oscillateur fluidique et la réponse S de la cellule de conversion de pression différentielle représentée à la figure 2.

Lorsque la température de l'eau passe de 20°C à environ 47,5°C en moins de 20s, le signal moyen S (zone noire sur la figure 4), issu de la cellule de conversion selon l'invention est malgré tout affecté par cette montée comme le montre la partie de la courbe du signal S pour laquelle le temps est inférieur à 40 s.

Par contre, lorsque les variations de la température sont beaucoup plus lentes, la figure 4 montre que le signal moyen S se stabilise autour de la valeur moyenne 0V et il n'est donc plus affecté par ces variations, ce qui montre l'efficacité de l'invention. La figure 4 montre également que le signal S instantané reproduit bien les oscillations à haute fréquence (10 à 40 Hz) qui sont représentatives du débit que l'on cherche à mesurer.

Il est bien entendu possible de dimensionner le passage 50 de la figure 2 pour que les phénomènes dont les fréquences sont inférieures à 0,1 Hz soient davantage atténués qu'avec l'exemple qui vient d'être décrit.

Toutefois, dans un tel cas, la cellule de mesure sera également moins sensible aux signaux de débit à faible fréquence d'oscillation.

Il faut alors établir un compromis entre la fréquence basse des signaux issus de l'oscillateur fluidique que l'on souhaite détecter et les niveaux acceptables des phénomènes à fréquences basses instaurant des différences de pression parasites entre les chambres 38 et 40. Pour déterminer les dimensions appropriées du passage 50, on procède de la manière suivante.

Le débit d'huile Q à travers le passage 50 est donné par la loi de Poiseuille qui s'écrit :

$$Q = \Delta P_s \pi d^4/(128L\eta),$$

où d correspond au diamètre du passage 50, L correspond à la longueur de l'ouverture 50, η correspond à la viscosité dynamique de l'huile, et $\Delta Ps$ est la pression de part et d'autre de le passage 50.

Les membranes 32, 34 sont caractérisées par un coefficient K défini comme étant le rapport de la pression appliquée sur la membrane au volume déplacé. Ce rapport K s'écrit de la manière suivante :

$$K = \Delta P_m / \Delta V \text{ , et } \Delta P = 2\Delta P_m + \Delta P_s$$

Pour une membrane plate en acier, le rapport K est par exemple égal à $0{,}11 \times 10^{12} Pa/m^3$

La fréquence de coupure s'écrit :

$$fc = K d^4/(128L\eta).$$

Étant donné que la fréquence de coupure fc est fixée par la valeur prédéterminée de 0,1 Hz qui correspond à la fréquence basse que l'on doit pouvoir détecter et que les valeurs de K et de η sont données, on peut déterminer des valeurs de L et de d répondant à la formule précédente.

Ainsi, par exemple, on trouve un diamètre du passage 50 de 120μm et une longueur L de 1,6mm, le diamètre extérieur du cylindre 48 étant par exemple égal à 4,5mm.

Il convient de noter que la longueur du passage 50 du cylindre en verre 48 est par exemple comprise entre 1 et 2mm et son diamètre d va de 60 à 120μm.

Le cylindre en verre est par exemple obtenu par découpage aux dimensions appropriées d'un capillaire de longueur égale à 1,60 m par exemple commercialisé par la société SCHOTT sous la référence commerciale N16B. Dans l'exemple de la figure 3, les valeurs numériques sont les suivantes:

- diamètre des membranes : 21 mm,
- épaisseur des membranes : 50 μm,
- volume des chambres 38, 40 : $210mm^3$ et $150mm^3$,

- huile utilisée : Dow Coming DC 200-5
- viscosité dynamique : 5 mm2 s$^{-1}$.

Avantageusement, le passage 50 aux dimensions adaptées permet de pallier à une évolution différentielle de la structure des membranes 32, 34 au cours du temps et permet également de s'affranchir du différentiel existant entre les valeurs des raideurs de ces membranes et qui peut, par élévation de température, être à l'origine d'une différence de pression parasite entre les chambres 38, 40 même si les volumes de ces chambres sont strictement égaux par construction.

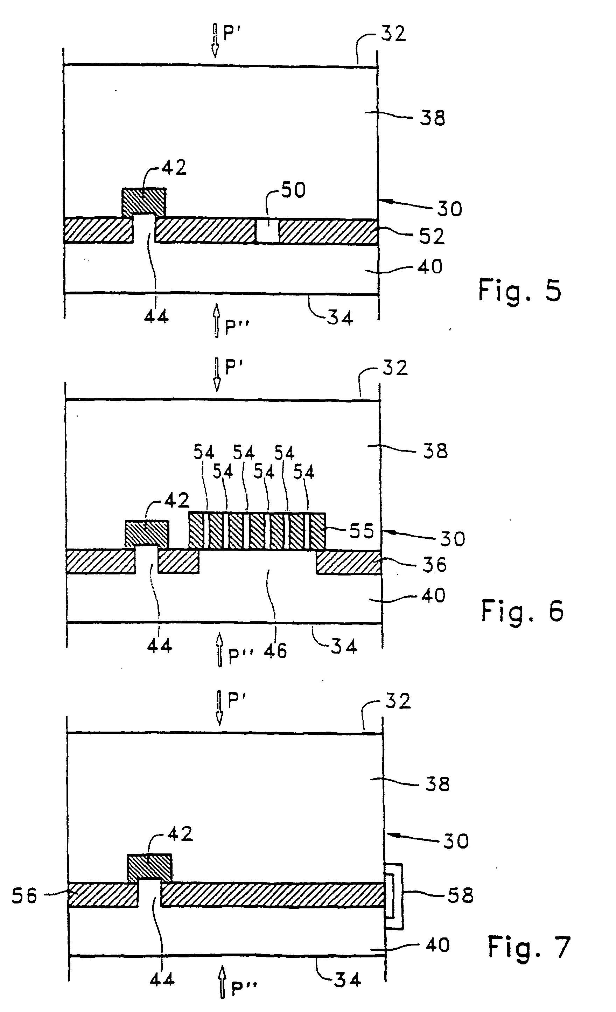

Selon un autre mode de réalisation de l'invention, le passage 50 aux dimensions adaptées est pratiqué dans la paroi de séparation 52 de la cellule, comme représenté sur la figure 5.

Selon une variante de réalisation de l'invention représentée à la figure 2, une pluralité de passages 54 sont pratiqués dans une pièce 55 rapportée sur la paroi de séparation 36 de la cellule (Fig.6), ces passages multiples jouant un rôle analogue à celui du passage 50 représenté sur la figure 2.

Le dimensionnement de ces passages s'effectue en conservant l'analogie électrique évoquée ci-dessus et en considérant ces passages 54 comme une pluralité de résistances électriques disposées en parallèle.

Selon encore un autre mode de réalisation représenté à la figure 7, la paroi de séparation 56 ne comporte qu'un orifice 44 au droit du capteur 42.

Le passage aménagé entre les chambres 38 et 40 est réalisé sous la forme d'un canal de communication 58 agencé sur la paroi périphérique 30 de la cellule de mesure de façon à contourner la paroi de séparation 56 et dont les deux extrémités opposées 58a et 58b débouchent respectivement dans lesdites chambres 38, 40.

Le canal est par exemple réalisé dans un fin tube capillaire.

Le rôle de ce canal est analogue à celui du passage 50 de la figure 2 et son dimensionnement est réalisé de façon similaire.

Il convient de remarquer que le passage permettant la communication entre les chambres 38 et 40 peut également être directement réalisé dans le capteur de pression différentielle sous la forme par exemple d'un canal traversant les parois du capteur en dehors de la zone où est situé l'élément sensible.

## Revendications

1. Cellule (28) de conversion d'une pression différentielle en signal électrique comprenant :

    - deux chambres (38, 40) remplies d'un fluide incompressible délimitées chacune par une membrane (32, 34) susceptible de se déformer sous l'action d'une pression extérieure et séparées l'une de l'autre par une paroi rigide (36;52; 56),

    - un capteur (42) associé à la dite paroi, sensible à la différence de pression exercée de part et d'autre de la paroi, et délivrant en réponse un signal électrique, **caractérisé en ce qu'**au moins un passage (50;54;58) est pratiqué entre les deux chambres (38, 40) et possède des dimensions adaptées pour, d'une part, au moins atténuer une différence de pression parasite s'établissant de part et d'autre de la paroi (36; 52;56) avec une fréquence faible voire nulle et. d'autre part, laisser ledit capteur détecter la différence de pression exercée de part et d'autre de la paroi aux fréquences plus élevées.

2. Cellule de mesure selon la revendication 1, dans laquelle le passage (50) aux dimensions adaptées est pratiqué dans la paroi (52) de séparation des chambres.

3. Cellule de mesure selon la revendication 1, dans laquelle une ouverture (46) de dimensions élargies par rapport aux dimensions adaptées du passage est pratiquée dans la paroi de séparation (36) des chambres et ledit passage (50;54) est pratiqué dans une pièce (48;55) qui est rapportée sur ladite paroi de séparation (36) de manière à ce que le passage et l'ouverture communiquent entre eux.

4. Cellule de mesure selon la revendication 3. dans laquelle la pièce rapportée (48;55) est de forme sensiblement cylindrique.

5. Cellule de mesure selon la revendication 1, dans laquelle le passage aux dimensions adaptées est réalisé sous la forme d'un canal de communication (58) qui contourne la paroi de séparation des chambres.

## Patentansprüche

1. Zelle (28) zur Konversion eines Differenzdrucks in ein elektrisches Signal mit:

    - zwei mit einem inkompressiblen Fluid gefüllten Kammern (38, 40), die jeweils durch eine Membran (32, 34), die sich unter der Wirkung eines äußeren Drucks verformen kann, begrenzt sind und die durch eine starre Wand (36; 52; 56) voneinander getrennt sind,

    - einem Aufnehmer (42), der mit der Wand verknüpft ist und empfindlich auf die beiderseits der Wand ausgeübte Druckdifferenz ist und als Reaktion ein elektrisches Signal liefert,

    **dadurch gekennzeichnet, dass** zumindest ein Durchgang (50; 54; 58) zwischen den zwei Kammern (38, 40) ausgebildet ist und Abmessungen besitzt, die einerseits dafür angepasst sind, zumindest eine sich beiderseits der Wand (36; 52; 56) herausbildende, parasitäre Druckdifferenz mit einer niedrigen oder gar verschwindenden Frequenz zu dämpfen, und andererseits den Aufnehmer die beiderseits der Wand ausgeübte Druckdifferenz bei höheren Frequenzen erfassen zu lassen.

2. Messzelle nach Anspruch 1, wobei der Durchgang (50) mit angepassten Abmessungen in der Trennwand (52) der Kammern ausgebildet ist.

3. Messzelle nach Anspruch 1, wobei eine Öffnung (46) mit relativ zu den angepassten Abmessungen des Durchgangs vergrößerten Abmessungen in der Trennwand (36) der Kammern ausgebildet ist und der Durchgang (50; 54) in einem Teil (48; 55) ausgebildet ist, das an der Trennwand (36) angefügt ist, so dass der Durchgang und die Öffnung miteinander in Verbindung stehen.

4. Messzelle nach Anspruch 3, wobei das angefügte Teil (48; 55) von im Wesentlichen zylindrischer Form ist.

5. Messzelle nach Anspruch 1, wobei der Durchgang mit angepassten Abmessungen in Form eines Verbindungskanals (58) ausgeführt ist, der die Trennwand der Kammern umgibt.

**Claims**

1. A measuring cell (28) for converting a differential pressure into an electrical signal, the cell comprising:

   - two chambers (38, 40) filled with an incompressible fluid separated from each other by a rigid wall (36; 52; 56) and each delimited by a membrane (32, 34) able to be deformed by an external pressure, and
   - a sensor (42) associated with said wall, sensitive to the pressure difference between opposite sides of the wall, and delivering an electrical signal in response thereto,

   which cell is **characterized in that** there is at least one passage (50; 54; 58) between the two chambers (38, 40) that has suitable dimensions at least to attenuate unwanted pressure differences at low frequencies or even zero frequency between opposite sides of the wall (36; 52; 56) and to allow said sensor to detect pressure differences at higher frequencies between opposite sides of-the wall.

2. A measuring cell according to claim 1, wherein the passage (50) with appropriate dimensions is in the wall (52) separating the chambers.

3. A measuring cell according to claim 1, wherein there is an opening (46) with dimensions larger than the suitable dimensions of the passage in the wall (36) separating the chambers and said passage (50; 54) is in a part (48; 55) that is attached to said separation wall (36) so that the passage and the opening communicate with each other.

4. A measuring cell according to claim 3, wherein the attached part (48; 55) is substantially cylindrical.

5. A measuring cell according to claim 1, wherein the passage with suitable dimensions takes the form of a communication channel (58) that circumvents the wall separating the chambers.

Fig. 1

Fig. 2

Fig. 3

Fig.4

Fig. 5

Fig. 6

Fig. 7